# EUROPEAN PATENT APPLICATION

(11) **EP 1 267 165 A1**
(43) Date of publication of application: **18.12.2002**
(21) Application number: 01830387.5
(22) Date of filing: 13.06.2001
(51) Int. Cl.: G01N 33/487

(54) **System for detecting contaminating agents in the oral cavity and a dental unit equipped with such a system**

(71) Applicant: CASTELLINI S.p.A., I-40013 Castel Maggiore (Bologna) (IT)
(72) Inventor: Castellini, Franco, I-40124 Bologna (IT)
(74) Representative: Lanzoni, Luciano

(57) **Abstract**

A unit for detecting contaminating agents, especially in dental surgeries, comprises detecting-transducing means (1) of a chemical, biochemical or electrical type designed to detect a quantity as a function of a variable to be checked and to provide an electrical signal (S) corresponding to the quantity detected; and means (2) for signalling the quantity, connected to the detecting-transducing means (1).

## Description

The present invention relates to a unit for detecting contaminating agents, such as bacterial loads in user fluids and biological and chemical indicators in fluids drawn from a patient undergoing treatment in a dental surgery. The invention also relates to a dental unit equipped with such a detecting unit.

The invention addresses dental surgeries in particular. In dental surgeries, dental units of the latest generation are of extremely high quality in terms of functionality, appliance control and, above all, level of sterility. This high quality is the result of constant research and development of solutions for the improvement of dental units which, in the philosophy of the Applicant, means also being able to offer health-care providers and patients an effective means of detecting biological indicators of diseases that can be transmitted during a dental treatment where there is a high risk of cross-infection between patient, health-care provider and dental unit. This risk applies to the dental surgery as a whole and to all the equipment normally used in it.

The ultimate goal of manufacturers of medical and dental equipment is to provide solutions capable of allowing treatment to be carried out under conditions of total safety for both health-care providers and patients. It is in this perspective that we must view the development of recent devices for disinfecting / sterilising dental handpieces and dental unit water and air lines (even between successive patient treatments) and the use of disposable instruments.

There is growing awareness, among health-care providers, not only of the risks of transmitting certain types of diseases during dental treatment, for example by direct contact with blood, but also of the dangers of infection due to the presence of bacteria in the user fluids of a dental unit.

Therefore, in order to ascertain the presence of bacteria in dental unit fluid supply lines and to identify chemical and biological indicators in patients undergoing treatment (thus guaranteeing both patients and health-care providers against the risks of cross infection during successive patient treatments with a contaminated dental unit) the Applicant has designed and developed a total safety unit capable, even in real time, of detecting not only bacteria in the fluids used in a dental unit but also biological and/or chemical indicators in a patient being treated.

Another aim is to provide a dental unit equipped with detecting units of this kind both on the lines that supply the user fluids to the equipment used on a patient, and on the conduits used to aspirate fluids from the patient.

Accordingly, the present invention provides a unit for detecting contaminating agents, especially in dental surgeries, said unit comprising detecting-transducing means of a chemical, biochemical or electrical type designed to detect a quantity as a function of a variable to be checked and to provide an electrical signal corresponding to the quantity detected; and means for signalling the quantity, connected to the detecting-transducing means.

The present invention also provides a dental unit of the type comprising at least one main conduit for supplying a user fluid to a plurality of branches which supply the fluid to a set of handpieces and to patient-user units and a second conduit for aspirating a fluid from a patient; the dental unit comprising as built-in parts of it, detecting-transducing means of a chemical, biochemical or electrical type designed to detect a quantity as a function of a variable to be checked in the user fluid and/or in the fluid aspirated from the patient and to provide an electrical signal corresponding to the quantity detected; and means for signalling the quantity, connected to the detecting-transducing means.

The technical features of the present invention, in accordance with the above-mentioned aims, are set out in the claims below and the advantages more clearly illustrated in the detailed description which follows, with reference to the accompanying drawings, which illustrate a preferred embodiment of the invention without restricting the scope of the inventive concept, and in which:
- Figure 1 is a schematic side view of a detecting unit according to the present invention, applied to an independent aspirator;
- Figure 2 is a diagram showing the water and air system of a dental unit equipped with the detecting unit according to the present invention.

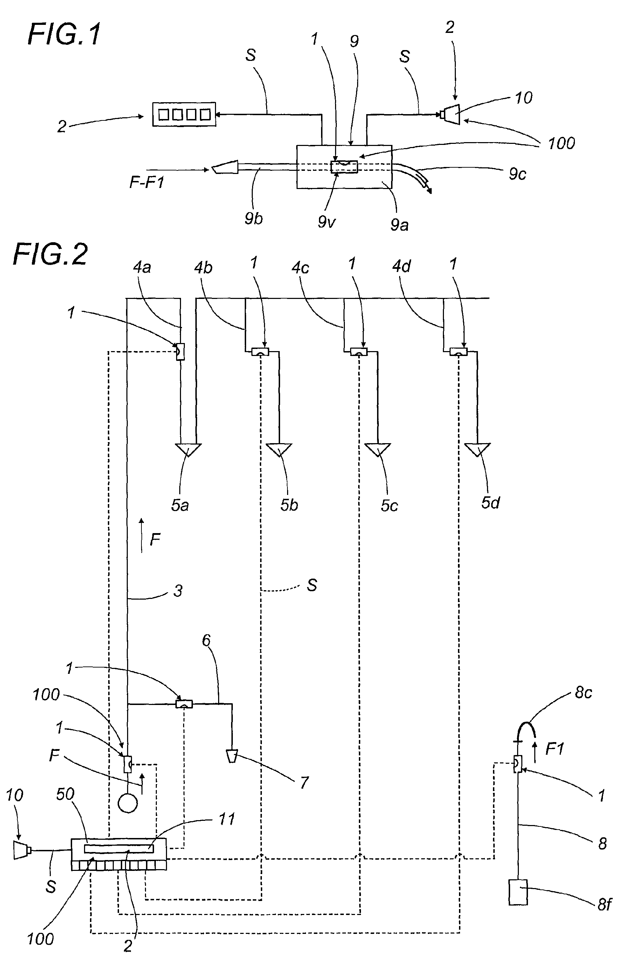

With reference to the accompanying drawings, in particular Figure 1, the numeral 100 denotes in its entirety the unit according to the present invention, designed in particular to detect contaminating agents in a dental surgery.

The unit basically comprises detecting-transducing means 1 which may be of a chemical, biochemical or electrical type and are designed to detect a quantity as a function of a variable to be checked and to provide an electrical signal S corresponding to the quantity detected.

The variables may therefore differ according to the task for which the means 1 are to be used; for example, to detect the presence of variables such as bacterial loads in user fluids F used on dental units, or biological agents, specific antibodies, viruses, and biological, chemical, or biochemical factors in fluids F1 drawn from a patient, usually consisting of the patient's blood and saliva.

Connected to the detecting-transducing means 1 there are means 2 for signalling the quantity detected, which, as described below, may differ according to the requirements of the dental surgery.

In a first simplified version described here purely by way of example without limiting the scope of the invention, the unit 100 may consist of an independent aspirating unit 9 which comprises a casing 9a, a suction and receiving portion 9b and an outlet portion 9c, and to which the detecting-transducing means 1 and the signalling means 2 are connected. The aspirating unit 9 may suck in the fluid F from the main water conduit of a dental unit or, alternatively, may aspirate the fluid F1 from the patient.

Obviously, the detecting-transducing means 1 in the aspirating unit 9 differ according to the variables to be detected. Thus, the fluid to be checked may be drawn into an appropriate tank 9V equipped with the sensors 1, or the fluid may be allowed to flow for a preset time through an area where the sensor 1 comes into contact with the fluid.

Constructionally, the detecting-transducing means 1 may consist of a sensor such as an electrode or a bio-sensor (illustrated schematically in the drawings) which is connected to the signalling means 2 and which can be set according to the variable to be detected, or which, alternatively, in combination with the parameters of the variable, may be preset according to a defined threshold.

These quantities, which are provided by way of example and differ according to the variables to be detected, may be brought to the attention of the operator in the surgery through the signalling means 2 which may differ according to the type of aspirating unit 9, the variable to be detected or even the requirements or personal preferences of the operator in the dental surgery.

The signalling means 2 may comprise an audible warning element 10 activated by the aforementioned electrical signal S upon detection of the quantity by the detecting-transducing means 1.

Alternatively, the signalling means 2 may comprise a unit 11 for displaying the quantity detected and being again activated by the electrical signal S issued by the detecting-transducing means 1 upon detection of the quantity.

In another embodiment, illustrated in Figure 2, especially suitable for on-line detection of contaminant variables in the dental surgery, the unit 100 may be built into a dental unit of known type (again see Figure 2) comprising at least one main conduit 3 for supplying a user fluid F(water or physiological saline) to a plurality of branches 4a, 4b, 4c, 4d used to supply a set of handpieces 5a, 5b, 5c, 5d and a branch 6 used to supply patient-user units 7 (such as a tumbler). In addition to the user fluid F supply conduits 3, 4 and 6, the dental unit is equipped with a second conduit 8 for aspirating fluids F1 from a patient (this conduit usually being equipped with a cannula 8c and a vacuum source 8f).

The detecting-transducing means 1 may be installed on the main conduit 3 of the dental unit and designed to come into contact with the user fluid F in order, for example, to detect in real time the bacterial load present in the user fluid F.

Moreover, the means 1 may obviously be positioned at critical points most affected by the bacterial loads: for this purpose, the detecting sensors 1 may also be installed on one or more of the branches 4a, 4b, 4c, 4d supplied by the main conduit 3, as well as on the branch 6 that supplies the patient-user units 7 so as to keep possible infections in the user fluid F under control throughout the dental unit.

The variables relating to the patient may be controlled in a similar manner by installing a sensor on the second aspirating conduit 8 to come into contact with the fluid F1 aspirated from the patient so as to detect one or more of the aforementioned variables.

In this case, the means 2 for signalling the quantity detected may consist of a conventional audible or visual warning system installed on the dental unit and usually controlled by a microprocessor unit 50 (as shown in Figure 2).

The detection unit described above and the dental unit equipped with units of this kind thus achieve the above mentioned aims thanks to a simple but effective structure for checking the user fluids in the dental unit and the fluids from the patient. This check permits the detection in real time of bacterial loads or of external agents potentially capable of contaminating the dental surgery, in particular the dental unit, and of infecting patients and health-care providers.

The above is possible through the simple application of sensors set up to perform the checks required.

The invention described can be subject to numerous modifications and variations without thereby departing from the scope of the inventive concept. Moreover, all the details of the invention may be substituted by technically equivalent elements.

## Claims

1. A unit for detecting contaminating agents, especially in dental surgeries, **characterised in that** it comprises:
- detecting-transducing means (1) of a chemical, biochemical or electrical type designed to detect a quantity as a function of a variable to be checked and to provide an electrical signal (S) corresponding to the quantity detected;
- means (2) for signalling the quantity, connected to the detecting-transducing means (1).

2. The unit according to claim 1, where the unit (100) can be applied to a dental unit of the type comprising at least one main conduit (3) for supplying a user fluid (F) to a plurality of branches (4) which supply the fluid to a set of handpieces (5), **characterised in that** the detecting-transducing means (1) comprise at least one sensor to be connected to the main conduit (3) and designed to come into contact with the user fluid (F).

3. The unit according to claim 1, where the unit (100) can be applied to a dental unit of the type comprising at least one main conduit (3) for supplying a user fluid (F) to a plurality of branches (4) which supply the fluid to a set of handpieces (5), **characterised in that** the detecting-transducing means (1) comprise at least one sensor to be connected to at least one of the branches (4) supplied by the main conduit (3).

4. The unit according to claim 3, **characterised in that** the detecting-transducing means (1) comprise at least one sensor to be connected to at least one of the branches (4) supplied by the main conduit (3).

5. The unit according to claim 1, where the unit (100) can be applied to a dental unit of the type comprising at least one main conduit (3) for supplying a user fluid (F) to a branch (6) which supplies the fluid to patient-user units (7), **characterised in that** the detecting-transducing means (1) comprise at least one sensor to be connected to the branch (6) that supplies the patient-user units (7).

6. The unit according to claim 1, where the unit (100) can be applied to a dental unit of the type comprising at least one second conduit (8) for aspirating fluids (F1) from a patient, **characterised in that** the detecting-transducing means (1) comprise at least one sensor to be connected to the second aspirating conduit (8) and designed to come into contact with the fluid (F1) aspirated from the patient.

7. The unit according to claim 1, **characterised in that** the detecting-transducing means (1) and the signalling means (2) are connected to an independent unit (9) that sucks in a fluid (F) supplied by a main conduit (3) from a dental unit.

8. The unit according to claim 1, **characterised in that** the detecting-transducing means (1) and the signalling means (2) are connected to an independent unit (9) for aspirating a fluid (F1) from a patient.

9. The unit according to any of the foregoing claims, **characterised in that** the detecting-transducing means (1) consist of an electrode connected to the signalling means (2) and set according to the variable to be detected.

10. The unit according to any of the foregoing claims, **characterised in that** the detecting-transducing means (1) consist of a bio-sensor connected to the signalling means (2) and set according to the variable to be detected.

11. The unit according to any of the foregoing claims, **characterised in that** the detecting-transducing means (1) consist of an electrode connected to the signalling means (2) and preset according to a defined threshold.

12. The unit according to any of the foregoing claims, **characterised in that** the detecting-transducing means (1) consist of a bio-sensor connected to the signalling means (2) and preset according to a defined threshold.

13. The unit according to any of the foregoing claims, **characterised in that** the signalling means (2) comprise an audible warning element (10) activated by the aforementioned electrical signal (S) upon detection of the quantity by the detecting-transducing means (1).

14. The unit according to any of the foregoing claims, **characterised in that** the signalling means (2) comprise a unit (11) for displaying the quantity detected and activated by the electrical signal (S) upon detection of the quantity by the detecting-transducing means (1).

15. A dental unit of the type comprising at least one main conduit (3) for supplying a user fluid (F) to a plurality of branches (4, 6) which supply the fluid to a set of handpieces (5) and to patient-user units (7), **characterised in that** it comprises the following as built-in parts of it:
- detecting-transducing means (1) of a chemical, biochemical or electrical type designed to detect a quantity as a function of a variable to be detected in the user fluid (F) and to provide an electrical signal (S) corresponding to the quantity detected;
- means (2) for signalling the quantity, connected to the detecting-transducing means (1).

16. A dental unit of the type comprising at least one second conduit (8) for aspirating a fluid (F) from a patient undergoing treatment, **characterised in that** it comprises the following as built-in parts of it:
- detecting-transducing means (1) of a chemical, biochemical or electrical type designed to detect a quantity as a function of a variable to be detected in the fluid (F) aspirated from a patient and to provide an electrical signal (S) corresponding to the quantity detected;
- means (2) for signalling the quantity, connected to the detecting-transducing means (1).

17. The dental unit according to claim 15, **characterised in that** the detecting-transducing means (1) are connected to the main conduit (3) upstream of the branches (4, 6) that supply the handpieces (5) and the patient-user units (7).

18. The dental unit according to claim 15, **characterised in that** the detecting-transducing means (1) are connected to at least one of the branches (4) that supply the handpieces (5).

19. The dental unit according to claim 15, **characterised in that** the detecting-transducing means (1) are connected to each of the branches (4) that supplies a corresponding handpiece (5).

20. The dental unit according to claim 15, **characterised in that** the detecting-transducing means (1) are connected to the branch (6) that supplies the patient-user units (7).
